# EUROPEAN PATENT SPECIFICATION

(11) **EP 3 889 041 B1**
(45) Date of publication and mention of the grant of the patent: **02.08.2023**
(21) Application number: 21165712.7
(22) Date of filing: 29.03.2021
(51) Int. Cl.: B64C 25/60, B64F 5/40, F16F 9/32

(54) **SYSTEMS AND METHOD FOR AUTOMATED SERVICING OF SHOCK STRUTS**
SYSTEM UND VERFAHREN ZUR AUTOMATISCHEN WARTUNG VON FEDERBEINEN
SYSTÈMES ET PROCÉDÉ POUR L'ENTRETIEN AUTOMATISÉ D'AMORTISSEURS

(30) Priority: 03.04.2020 IN 202041014917; 04.08.2020 US 202016984482
(43) Date of publication of application: 06.10.2021
(73) Proprietor: Goodrich Corporation, Charlotte, NC 28217-4578 (US)
(72) Inventor: KEKAN, Rajendra S., South Burlington, VT Vermont 05403 (US)
(74) Representative: Dehns

(56) References cited:
- EP-A1- 3 118 111
- EP-A1- 3 165 469
- EP-A1- 3 424 815
- EP-A1- 3 578 847
- EP-A2- 3 184 423
- WO-A1-2014/184521

## Description

### CROSS REFERENCE TO RELATED APPLICATIONS

This application claims priority to and the benefit of India Patent Application No. 202041014917 filed on April 3, 2020 and entitled "SYSTEMS AND METHOD FOR AUTOMATED SERVICING OF SHOCK STRUTS,".

### FIELD

The present disclosure relates generally to the field of landing gear, and more specifically to systems and methods for automated servicing of shock struts.

### BACKGROUND

Shock absorbing devices are used in a wide variety of vehicle suspension systems for controlling motion of a vehicle and its tires with respect to the ground and for reducing transmission of transient forces from the ground to the vehicle. Shock absorbing struts are a common component in most aircraft landing gear assemblies. Current shock struts generally rely on pressurized gas (e.g., nitrogen gas) and hydraulic fluid (e.g., oil) to absorb various shock load. Having a correct quantity of each of these fluids in the shock strut is needed for proper performance. During landing gear maintenance, gas and/or hydraulic fluid may be added to the shock strut. Current fluid servicing systems are operated manually, for example, by maintenance personnel controlling the pumps used to input the fluid into the shock strut. Manually controlling the pumps is time consuming, may require skilled maintenance personnel, can lead to overflow and/or wasted fluid, and is generally a less accurate way of controlling the amount of fluid added. WO 2014/184521 relates to suspension strut servicing disclosing a method that involves measuring a level of hydraulic damping fluid within a dual stage landing gear strut. A strut closure is measured. Required level of the damping fluid is determined in dependence on the closure and in dependence on a predetermined required damping fluid volume for correct servicing of the strut and internal volume of a damping fluid chamber e.g. lower chamber, of the strut for predetermined range of the closure. An amount of damping fluid in the strut is adjusted such that the measured level of damping fluid complies with the required level of damping fluid level.

### SUMMARY

According to the invention, a system for servicing a shock strut is defined in claim 1 and a method for servicing a shock strut is defined in claim 7. Embodiments thereof are defined in the dependent claims.

Features and elements as well as the operation of the disclosed embodiments will become more apparent in light of the following description and accompanying drawings.

### BRIEF DESCRIPTION OF THE DRAWINGS

The subject matter of the present disclosure is particularly pointed out and distinctly claimed in the concluding portion of the specification. A more complete understanding of the present disclosure, however, may best be obtained by referring to the detailed description and claims when considered in connection with the figures, wherein like numerals denote like elements.
FIG. 1 illustrates an aircraft having landing gear in a landing gear down position, in accordance with various embodiments;
FIG. 2 illustrates a shock strut for a landing gear, in accordance with various embodiments;
FIGs. 3A, 3B, and 3C illustrate a system for servicing a landing gear shock strut, in accordance with various embodiments; and
FIG. 4. illustrates a method for servicing a landing gear shock strut, in accordance with various embodiments.

### DETAILED DESCRIPTION

All ranges and ratio limits disclosed herein may be combined. It is to be understood that unless specifically stated otherwise, references to "a," "an," and/or "the" may include one or more than one and that reference to an item in the singular may also include the item in the plural.

The detailed description of exemplary embodiments herein makes reference to the accompanying drawings, which show exemplary embodiments by way of illustration. While these exemplary embodiments are described in sufficient detail to enable those skilled in the art to practice the exemplary embodiments of the disclosure, it should be understood that other embodiments may be realized and that logical changes and adaptations in design and construction may be made in accordance with this disclosure and the teachings herein. Thus, the detailed description herein is presented for purposes of illustration only and not limitation. The steps recited in any of the method or process descriptions may be executed in any order and are not necessarily limited to the order presented. Furthermore, any reference to singular includes plural embodiments, and any reference to more than one component or step may include a singular embodiment or step. Also, any reference to attached, fixed, connected or the like may include permanent, removable, temporary, partial, full and/or any other possible attachment option. Additionally, any reference to without contact (or similar phrases) may also include reduced contact or minimal contact.

Systems and methods disclosed herein may be useful for servicing landing gear shock struts. In accordance with various embodiments, the systems may be configured to electrically control the flow of fluid to the shock strut. In accordance with various embodiments, the system may determine the volume and/or flowrate of the fluid based on data output from sensors (e.g., pressure, temperature, and position sensors) operationally coupled to the shock strut. The systems and methods disclosed herein may provide a simple and precise means for any operator to service the shock strut. In this regard, the disclosed systems and methods may eliminate a need for manually controlling fluid pumps, thereby decreasing service time and/or increasing landing gear servicing efficiency.

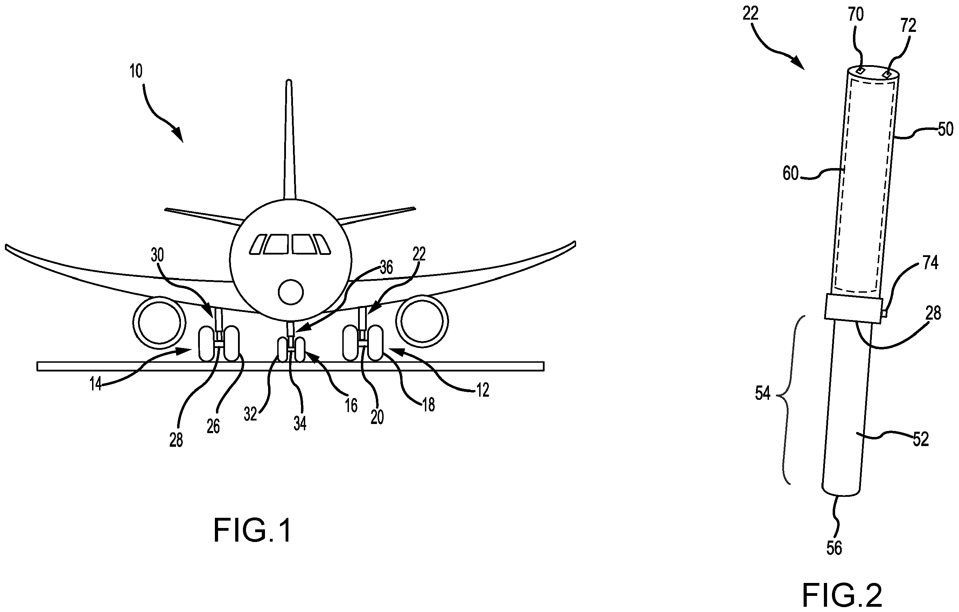

With reference to FIG. 1, an aircraft 10 is illustrated. Aircraft 10 may include landing gear such as left (or first) landing gear 12, right (or second) landing gear 14, and nose (or third) landing gear 16. Left landing gear 12, right landing gear 14, and nose landing gear 16 may generally support aircraft 10 when aircraft 10 is not flying, allowing aircraft 10 to taxi, take off, and land without damage. Left landing gear 12 includes wheels 18, which may rotate about an axle 20. Left landing gear 12 includes a shock strut 22. Shock strut 22 may be coupled to axle 20 or to a landing gear bogie of left landing gear 12. Right landing gear 14 includes wheels 26, which may rotate about an axle 28. Right landing gear 14 includes a shock strut 30. Shock strut 30 may be coupled to axle 28 or to a landing gear bogie of right landing gear 14. Nose landing gear 16 may include wheels 32, which may rotate about an axle 34. The nose wheels 32 may differ from the main wheels 18, 26 in that the nose wheels may not include a brake. Nose landing gear 16 may include a shock strut 36. Shock strut 36 may be coupled to axle 34 or to a landing gear bogie of nose landing gear 16.

Aircraft 10 may include aircraft sensors 130 that detect aircraft status information. Aircraft status information may mean information relating to the status of aircraft 10, for example, the presence of weight on wheels, landing gear position, wheel position, air temperature, global positioning system coordinates, and/or the like.

With reference to FIG. 2, shock strut 22 of left landing gear 12 is illustrated. While FIG. 2 illustrates shock strut 22, it is contemplated and understood that shock strut 30 of right landing gear 14 and/or shock strut 36 of nose landing gear 16 may each include the features and functionalities as described herein with reference to shock strut 22.

Shock strut 22 may include a strut cylinder 50 and a strut piston 52. Strut piston 52 may be operatively coupled to strut cylinder 50. Strut cylinder 50 may be configured to receive strut piston 52 in a manner that allows the two components to telescope with respect to one another. Strut piston 52 may translate into and out strut cylinder 50, thereby absorbing and damping loads imposed on left landing gear 12. Strut piston 52 may extend from strut cylinder 50 by a stroke length 54. Stroke length 54 may correspond to a distance between an end 56 of strut piston 52 and an end 58 of strut cylinder 50. End 56 of strut piston 52 may be located proximate and/or coupled to axle 20 of left landing gear 12, with momentary reference to FIG. 1. End 58 of strut cylinder 50 is oriented toward axle 20 and may define the cylinder opening through which strut piston 52 translates. Fluid including hydraulic fluid (e.g., oil) and/or pressurized gas, such as nitrogen gas, may be located within an internal volume 60 of strut cylinder 50. The internal volume 60 may consist of a single cavity or separate cavities containing different isolated fluids within the cavities. Strut piston 52 is configured to translate relative to strut cylinder 50 in response to changes in the internal cavity pressure, for example, in response to the flow of fluid into and out internal volume 60 of strut cylinder 50.

In various embodiments, one or more pressure sensor(s) 70, one or more temperature sensor(s) 72, and/or one or more position sensor(s) 74 may be operationally coupled to and in operable communication with shock strut 22. Pressure sensor(s) 70 may be configured to measure the pressure in various locations along shock strut 22. For example, one or more pressure sensor(s) 70 may measure a pressure within internal volume 60. Temperature sensor(s) 72 may be configured to measure a temperature in various locations along shock strut 22. For example, one or more temperature sensor(s) 72 may measure a temperature within internal volume 60. Position sensor(s) 74 may be configured to measure stroke length 24 and/or may output data, which may be used to determine stroke length 24. Position sensor(s) 74 may be coupled to strut piston 52 and/or other components of landing gear 12. For example, position sensors 74 may be coupled landing gear linkages (e.g., struts) that pivot relative to one another in response to changes in stroke length 54, and the data output from position sensor(s) 74 may correlate to an angle formed by a pair of landing gear linkages that pivot relative to one another in response to changes in stroke length 54.

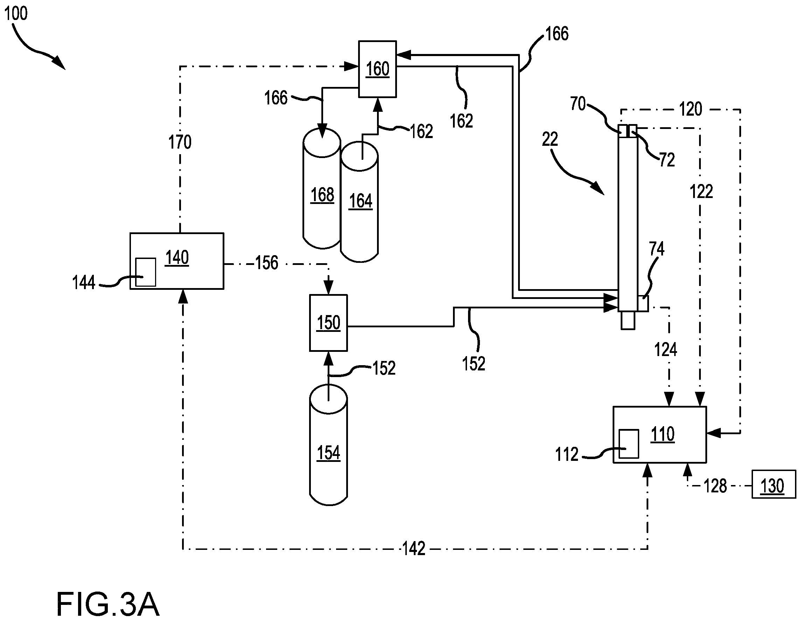

With additional reference to FIG. 3A, a system 100 for servicing a shock strut is illustrated, in accordance with various embodiments. System 100 may be configured to control the flow of fluid drained from and injected into a shock strut, such as shock strut 22. System 100 may include a ground support controller 110. Ground support controller 110 may include one or more processors and may be capable of implementing logic. The processor(s) can be general purpose processor(s), digital signal processor(s) (DSPs), application specific integrated circuits (ASICs), field programmable gate arrays (FPGAs) or other programmable logic devices, discrete gates or transistor logics, discrete hardware components, or a combination thereof.

System program instructions and/or controller instructions may be loaded onto tangible, non-transitory, computer-readable medium 112 (also referred to herein as a tangible, non-transitory, memory 112) having instructions stored thereon that, in response to execution by ground support controller 110, cause the ground support controller to perform various operations. The term "non-transitory" is to be understood to remove only propagating transitory signals per se from the claim scope and does not relinquish rights to all standard computer-readable media that are not only propagating transitory signals per se. Stated another way, the meaning of the term "non-transitory computer-readable medium" and "non-transitory computer-readable storage medium" should be construed to exclude only those types of transitory computer-readable media which were found in *In Re Nuijten* to fall outside the scope of patentable subject matter under 35 U.S.C. § 101.

Ground support controller 110 may receive pressure measurements 120 from pressure sensor(s) 70, temperature measurements 122 from temperature sensor(s) 72, and position measurements 124 from position sensor(s) 74. Ground support controller 110 may be in electrically coupled to, pressure sensors 70, temperature sensors 72, and pressure sensors 74 via wired connection, wireless connection, or any other form of connection capable of transferring data and/or signals between ground support controller 110 and pressure sensors 70, temperature sensors 72, and pressure sensors 74.

Ground support controller 110 may determine an actual hydraulic fluid volume of shock strut 22 (e.g., a current volume of the hydraulic fluid located within shock strut 22) and/or an actual pressurized gas volume of shock strut 22 (e.g., a current volume of the pressurized gas located within shock strut 22). Ground support controller 110 may determine the actual hydraulic fluid volume using pressure measurements 120, temperature measurements 122, and position measurements 124. Ground support controller 110 may determine the actual pressurized gas volume of shock strut 22 using pressure measurements 120, temperature measurements 122, and position measurements 124.

Ground support controller 110 may also receive data 128 from various aircraft sensors 130. Aircraft sensors 130 may comprise, for example, weight on wheels sensors, landing gear position sensors, or other sensors configured to convey information corresponding to shock strut 22 and/or left landing gear 12. Ground support controller 110 may be configured to determine a desired (or target) shock strut pressure and/or a desired (or target) stroke length using the temperature measurements 122, and data 128. Ground support controller 110 may determine a desired hydraulic fluid volume (or target hydraulic fluid volume) and/or a desired pressurized gas volume (e.g., a target pressurized gas volume) using on the desired shock strut pressure, the desired stroke length, and temperature measurements 122. Ground support controller 110 may compare the actual hydraulic fluid volume to the desired hydraulic fluid volume and determine a difference between the actual hydraulic fluid volume and the desired hydraulic fluid volume. Ground support controller 110 may compare the actual pressurized gas volume to the desired pressurized gas volume and determine a difference between the actual pressurized gas volume to the desired pressurized gas volume. The the differences may be expressed as a percentage of desired volume

System 100 further includes a system controller 140. System controller 140 may be in communication with and operably coupled to ground support controller 110. In accordance with various embodiments, system controller 140 may receive signals 142 from the ground support controller 110. Signals 142 may be sent via wired or wireless connection. Signals 142 may correspond to the difference between the desired hydraulic fluid volume and the actual hydraulic fluid volume (referred to herein as the "hydraulic fluid volume difference") and/or to the difference between the desired pressurized gas volume and the actual pressurized gas volume (referred to herein as the "pressurized gas volume difference"). In various embodiments, signals 142 may corresponds to the desired pressurized gas volume, the actual pressurized gas volume, the actual hydraulic fluid volume and/or the desired hydraulic fluid volume calculated by ground support controller 110.

System controller 140 may include one or more processors and may be capable of implementing logic. The processor(s) can be general purpose processor(s), DSPs, ASICs, FPGAs or other programmable logic devices, discrete gates or transistor logics, discrete hardware components, or a combination thereof. System program instructions and/or controller instructions may be loaded onto tangible, non-transitory, computer-readable medium 144 (also referred to herein as a tangible, non-transitory, memory 144) having instructions stored thereon that, in response to execution by system controller 140, cause the system controller to perform various operations. In various embodiments, system controller 140 may be located on a portable electronic device, such as a laptop computer, a tablet, a cellular phone, or the like.

System controller 140 is configured to determine a desired fluid flow rate (e.g., a fluid flow velocity) based on the signals 142 received from ground support controller 110. In various embodiments, system controller 140 may determine a desired fluid injection volume based on the signals 142 received from ground support controller 110. System controller 140 is configured to determine the desired fluid flow rate based on the hydraulic fluid volume difference and/or the pressurized gas volume difference. For example, system controller 140 may decrease the fluid flow rate as the difference(s) decrease. Decreasing the fluid flow rate as the hydraulic fluid volume and the pressurized gas differences decrease allows for better control of the filling process, particularly, as the volume of fluid injected approaches the desired hydraulic fluid volume and the desired pressurized gas volume. Decreasing the fluid flow rate as the hydraulic fluid volume and the pressurized gas differences decrease allows tends increase a likelihood shock strut 12 will be filled to the desired hydraulic fluid volume and the desired pressurized gas volume, and may reduce occurrences of underfilling and overfilling.

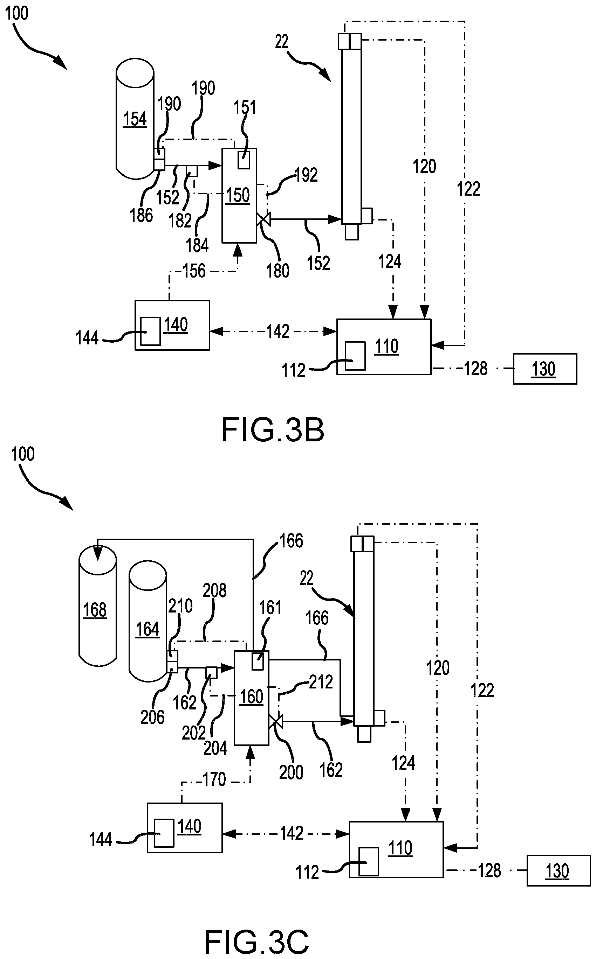

System 100 further includes a pressurized gas flow controller 150. As described in further detail below with reference to FIG. 3B, pressurized gas flow controller 150 may control the flow of pressurized gas 152 from a gas source 154 to shock strut 22. Pressurized gas flow controller 150 may be in communication with and operably coupled to system controller 140. In accordance with various embodiments, pressurized gas flow controller 150 may receive desired fluid flow rate signals 156 from the system controller 140 (also referred to as gas flow rate signals 156). Desired fluid flow rate signals 156 may be sent via wired or wireless connection. Desired fluid flow rate signals 156 may correspond the desired pressurized gas fluid flow rate determined by system controller 140 based on the pressurized gas volume difference. Pressurized gas flow controller 150 may modulate the fluid flow rate of pressurized gas 152 based on desired fluid flow rate signals 156.

System 100 further includes a hydraulic fluid flow controller 160. As described in further detail below with reference to FIG. 3C, hydraulic fluid flow controller 160 may control the flow of hydraulic fluid 162 from a hydraulic fluid source 164 to shock strut 22. Hydraulic fluid flow controller 160 may also control the flow of hydraulic fluid 166 between shock strut 22 and a hydraulic fluid receptacle 168. Hydraulic fluid flow controller 160 may be in communication with and operably coupled to system controller 140. In accordance with various embodiments, hydraulic fluid flow controller 160 may receive desired fluid flow rate signals 170 from the system controller 140 (also referred to as desired hydraulic fluid flow rate signals). Desired fluid flow rate signals 170 may be sent via wired or wireless connection. Desired fluid flow rate signals 170 may correspond the desired hydraulic fluid flow rate determined by system controller 140 based on the hydraulic fluid volume difference. Hydraulic fluid flow controller 160 may modulate the fluid flow rate of hydraulic fluid 162 based on desired hydraulic flow rate signals 170 received from system controller 140.

With reference to FIG. 3B, additional details of system 100 are illustrated, in accordance with various embodiments. Pressurized gas flow controller 150 is configured to regulate the flow of pressurized gas 152 from gas source 154 to shock strut 22. Pressurized gas flow controller 150 may include one or more processors and may be capable of implementing logic. The processor(s) can be general purpose processor(s), DSPs, ASICs, FPGAs or other programmable logic devices, discrete gates or transistor logics, discrete hardware components, or a combination thereof. System program instructions and/or controller instructions may be loaded onto tangible, non-transitory, computer-readable medium 151 having instructions stored thereon that, in response to execution by pressurized gas flow controller 150, cause the pressurized gas flow controller to perform various operations.

Pressurized gas flow controller 150 may be in communication with and may control one or more valves 180 and/or one or more pumps 182 fluidly coupled between gas source 154 and shock strut 22. In various embodiments, pump 182 may be configured to pump gas 152 from gas source 154. Pressurized gas flow controller 150 may send commands 184 to pump 182. Commands 184 may control the fluid flow rate at which pump 182 pumps gas 152. In various embodiments, commands 184 are configured to cause pump 182 to gas 152 at a fluid flow rate that is equal, or nearly equal, to the desired fluid flow rate signals 156 output by system controller 140.

In various embodiments, system 100 is configured to cause the fluid flow rate generated by pump 182 to decrease as the pressurized gas volume difference decreases. In various embodiments, system controller 140 may send desired fluid flow rate signals 156 corresponding to a first fluid flow rate, when the pressurized gas volume difference is greater than or equal to a first threshold value. Pressurized gas flow controller 150 then outputs a command 184, corresponding to the first fluid flow rate to pump 182. Pump 182 pumps gas 152 at the first fluid flow rate, in response to receiving command 184. For example, system controller 140 may send desired fluid flow rate signals 156 corresponding to the first fluid flow rate to pressurized gas flow controller 150 when the pressurized gas volume difference is greater than or equal to 50% (i.e., when the actual pressurized gas volume is 50% or less of the desired pressurized gas volume). In various embodiments, the first fluid flow rate may be between 50% and 100%, 75% and 100%, or 95% and 100% of a maximum fluid flow rate of pump 182. In this regard, commands 184 corresponding the first fluid flow rate are configured to cause pump 182 pump gas 152 at fluid flow rate of between 50% and 100%, 75% and 100%, or 95% and 100% of the maximum fluid flow rate pump 182 may generate.

In various embodiments, system controller 140 may send desired fluid flow rate signals 156 corresponding to a second fluid flow rate when the pressurized gas volume difference is greater than or equal to a second threshold value and less than the first threshold value. Pressurized gas flow controller 150 then outputs a command 184, corresponding to the second fluid flow rate to pump 182. Pump 182 pumps gas 152 at the second fluid flow rate, in response to receiving command 184. For example, system controller 140 may send desired fluid flow rate signals 156 corresponding to the second fluid flow rate to pressurized gas flow controller 150 when the pressurized gas volume difference is greater than or equal to 10% and less than 50% (i.e., when the actual pressurized gas volume is greater than 50% of the of the desired pressurized gas volume and less than or equal to 90% of the desired pressurized gas volume). In various embodiments, the second fluid flow rate may be between 15% and 50%, 25% and 50%, or 40% and 50% of the maximum fluid flow rate of pump 182. In this regard, commands 184 corresponding the second fluid flow rate are configured to cause pump 182 pump gas 152 at fluid flow rate of between 15% and 50%, 25% and 50%, or 40% and 50% of the maximum fluid flow rate pump 182 may generate.

In various embodiments, system controller 140 may send desired fluid flow rate signals 156 corresponding to a third fluid flow rate when the pressurized gas volume difference is less than the second threshold value. Pressurized gas flow controller 150 then outputs a command 184, corresponding to the third fluid flow rate to pump 182. Pump 182 pumps gas 152 at the third fluid flow rate, in response to receiving command 184. For example, system controller 140 may send desired fluid flow rate signals 156 corresponding to the third fluid flow rate to pressurized gas flow controller 150 when the pressurized gas volume difference is less than 10% (i.e., when the actual pressurized gas volume is greater than 90% of the of the desired pressurized gas volume). In various embodiments, the third fluid flow rate may be between 1% and 20%, 1% and 10%, or 1% and 5% of the maximum fluid flow rate of pump 182. In this regard, commands 184 corresponding third fluid flow rate are configured to cause pump 182 pump gas 152 at fluid flow rate of between 1% and 20%, 1% and 10%, or 1% and 5% of the maximum fluid flow rate pump 182 may generate.

In various embodiments, pump 182 may be eliminated as the pressure within gas source 154 may drive the flow of gas 152 output from gas source 154. In various embodiments, pressurized gas flow controller 150 may control actuation of a valve 186 of gas source 154. In various embodiments, pressurized gas flow controller 150 may send actuation command 188 to an actuator 190 configured to actuate valve 186 between an open position and a closed position.

In various embodiments, system 100 actuates valve(s) 180, instead of or in addition to modulating the fluid flow rate of pump 182, to decrease fluid flow rate of gas 152. In various embodiments, pressurized gas flow controller 150 sends actuation commands 192 configured to actuate one or more valve(s) 180. In various embodiments, one or more of valve(s) 180 may comprise a solenoid valve other valve, which may be actuated via an actuation commands 192. In various embodiments, actuation commands 192 may be sent to one or more valve actuators operably coupled and configured to translate valve(s) 180.

In various embodiments, system controller 140 may send desired fluid flow rate signals 156 corresponding to a first fluid flow rate, when the pressurized gas volume difference is greater than or equal to the first threshold value. Pressurized gas flow controller 150 then outputs actuation commands 192, configured to actuate valve(s) 180 to a position where the flow output from valves(s) is equal, or nearly equal to the first fluid flow rate. For example, system controller 140 may send desired fluid flow rate signals 156 corresponding to the first fluid flow rate, when the pressurized gas volume difference is greater than or equal to 50% (i.e., when the actual pressurized gas volume is 50% or less of the desired pressurized gas volume). In various embodiments, the first fluid flow rate may be between 50% and 100%, 75% and 100%, or 95% and 100% of a maximum fluid flow rate through and/or output by valve(s) 180. In various embodiments, valves(s) 180 may be in a fully open position when the first fluid flow rate is desired.

In various embodiments, system controller 140 may send desired fluid flow rate signals 156 corresponding to a second fluid flow rate, when the pressurized gas volume difference is greater than or equal to a second threshold value and less than the first threshold value. Pressurized gas flow controller 150 then outputs actuation commands 192, configured to actuate valve(s) 180 to a position where the flow output from valves(s) 180 is equal, or nearly equal, to the second fluid flow rate. For example, actuation commands 192 may cause one or more valves 180 to close or partially close to reduce the fluid flow rate output from valve(s) 180. In various embodiments, the second fluid flow rate may be between 15% and 50%, 25% and 50%, or 40% and 50% of the maximum fluid flow rate through and/or output by valve(s) 180. The maximum fluid flow rate is generated when valve(s) 180 are in a fully open position.

In various embodiments, system controller 140 may send desired fluid flow rate signals 156 corresponding to a third fluid flow rate, when the pressurized gas volume difference is less than the second threshold value. Pressurized gas flow controller 150 then outputs actuation commands 192, configured to actuate valve(s) 180 to a position where the flow output from valves(s) 180 is equal, or nearly equal to the third fluid flow rate. For example, actuation commands 192 may cause one or more valves 180 to close or partially close to reduce the fluid flow rate output from valve(s) 180. In various embodiments, the third fluid flow rate may be between 1% and 20%, 1% and 10%, or 1% and 5% of the maximum fluid flow rate through and/or output by valve(s) 180.

With reference to FIG. 3C, additional details of system 100 are illustrated, in accordance with various embodiments. Hydraulic fluid flow controller 160 is configured to regulate the flow of hydraulic fluid 162 from hydraulic fluid source 164 to shock strut 22. Hydraulic fluid flow controller 160 may include one or more processors and may be capable of implementing logic. The processor(s) can be general purpose processor(s), DSPs, ASICs, FPGAs or other programmable logic devices, discrete gates or transistor logics, discrete hardware components, or a combination thereof. System program instructions and/or controller instructions may be loaded onto tangible, non-transitory, computer-readable medium 161 (also referred to herein as a tangible, non-transitory, memory 161) having instructions stored thereon that, in response to execution by hydraulic fluid flow controller 160, cause the hydraulic fluid flow controller to perform various operations.

Hydraulic fluid flow controller 160 may be in communication with and may control one or more valves 200 and/or one or more pumps 202 fluidly coupled between hydraulic fluid source 164 and shock strut 22. In various embodiments, pump 202 may be configured to pump hydraulic fluid 162 from gas source 154. Hydraulic fluid flow controller 160 may send commands 204 to pump 202. Commands 204 may control the fluid flow rate at which pump 202 pumps hydraulic fluid 162. In various embodiments, commands 204 are configured to cause pump 202 to pump hydraulic fluid 162 at a fluid flow rate that is equal, or nearly equal, to the desired fluid flow rate signals 170 output by system controller 140.

In various embodiments, system 100 is configured to cause the fluid flow rate generated by pump 202 to decrease as the hydraulic fluid volume difference decreases. In various embodiments, system controller 140 may send desired fluid flow rate signals 170 corresponding to a first hydraulic fluid flow rate, when the hydraulic fluid volume difference is greater than or equal to a first hydraulic fluid threshold value. Hydraulic fluid flow controller 160 then outputs a command 204, corresponding to the first fluid flow rate to pump 202. Pump 202 pumps hydraulic fluid 162 at the first fluid flow rate, in response to receiving command 204. In various embodiments, the first fluid flow rate may be between 50% and 100%, 75% and 100%, or 95% and 100% of a maximum fluid flow rate of pump 202.

In various embodiments, system controller 140 may send a desired fluid flow rate signals 170 corresponding to a second hydraulic fluid flow rate, when the hydraulic fluid volume difference is greater than or equal to a second threshold value and less than the first threshold value. Hydraulic fluid flow controller 160 then outputs a command 204, corresponding to the second hydraulic fluid flow rate to pump 202. Pump 202 pumps hydraulic fluid 162 at the second fluid flow rate, in response to receiving command 204. In various embodiments, the second fluid flow rate may be between 15% and 50%, 25% and 50%, or 40% and 50% of the maximum fluid flow rate of pump 202.

In various embodiments, system controller 140 may send a desired fluid flow rate signals 170 corresponding to a third fluid flow rate, when the hydraulic fluid volume difference is less than the second hydraulic fluid threshold value. Hydraulic fluid flow controller 160 then outputs a command 204, corresponding to the third fluid flow rate to pump 202. Pump 202 pumps hydraulic fluid 162 at the third fluid flow rate, in response to receiving command 204. In various embodiments, the third fluid flow rate may be between 1% and 20%, 1% and 10%, or 1% and 5% of the maximum fluid flow rate of pump 202.

In various embodiments, pump 202 may be eliminated as the pressure within hydraulic fluid source 164 may drive the flow of hydraulic fluid 162 output from hydraulic fluid source 164. In various embodiments, hydraulic fluid flow controller 160 may control actuation of a valve 206 of hydraulic fluid source 164. In various embodiments, hydraulic fluid flow controller 160 may send actuation commands 208 to an actuator 210 configured to actuate valve 206 between an open position and a closed position.

In various embodiments, system 100 actuates valve(s) 200, instead of or in addition to modulating the fluid flow rate of pump 202, to decrease fluid flow rate of hydraulic fluid 162. In various embodiments, hydraulic fluid flow controller 160 sends actuation commands 212 configured to actuate one or more valve(s) 200. In various embodiments, one or more of valve(s) 200 may comprise a solenoid valve or other valve, which may be actuated via an actuation commands 212. In various embodiments, actuation commands 212 may be sent to one or more valve actuators operably coupled and configured to translate valve(s) 200.

In various embodiments, system controller 140 may send desired fluid flow rate signals 170 corresponding to a first fluid flow rate, when the hydraulic fluid volume difference is greater than or equal to the first threshold value. Hydraulic fluid flow controller 160 then outputs actuation command(s) 212, configured to actuate valve(s) 200 to a position where the flow output from valves(s) 200 is equal, or nearly equal to the first fluid flow rate. The first fluid flow rate may be between 50% and 100%, 75% and 100%, or 95% and 100% of a maximum fluid flow rate through and/or output by valve(s) 200. In various embodiments, valves(s) 200 may be in a fully open position, when the first hydraulic fluid flow rate is desired.

In various embodiments, system controller 140 may send desired fluid flow rate signals 170 corresponding to a second fluid flow rate when the hydraulic fluid volume difference is greater than or equal to a second threshold value and less than the first threshold value. Hydraulic fluid flow controller 160 then outputs actuation commands 212, configured to actuate valve(s) 200 to a position where the flow output from valves(s) 200 is equal, or nearly equal to the second fluid flow rate. For example, actuation commands 212 may cause one or more valve(s) 200 to close or partially close to reduce the fluid flow rate output from valve(s) 200. In various embodiments, the second fluid flow rate may be between 15% and 50%, 25% and 50%, or 40% and 50% of the maximum fluid flow rate through and/or output by valve(s) 200. The maximum fluid flow rate is generated when valve(s) 200 are in a fully open position.

In various embodiments, system controller 140 may send desired fluid flow rate signals 170 corresponding to a third fluid flow rate when the hydraulic fluid volume difference is less than the second threshold value. Hydraulic fluid flow controller 160 then outputs actuation commands 212, configured to actuate valve(s) 200 to a position where the flow output from valves(s) 200 is equal, or nearly equal to the third fluid flow rate. For example, actuation commands 212 may cause one or more valves 180 to close or partially close to reduce the fluid flow rate output from valve(s) 200. In various embodiments, the third fluid flow rate may be between 1% and 20%, 1% and 10%, or 1% and 5% of the maximum fluid flow rate through and/or output by valve(s) 200.

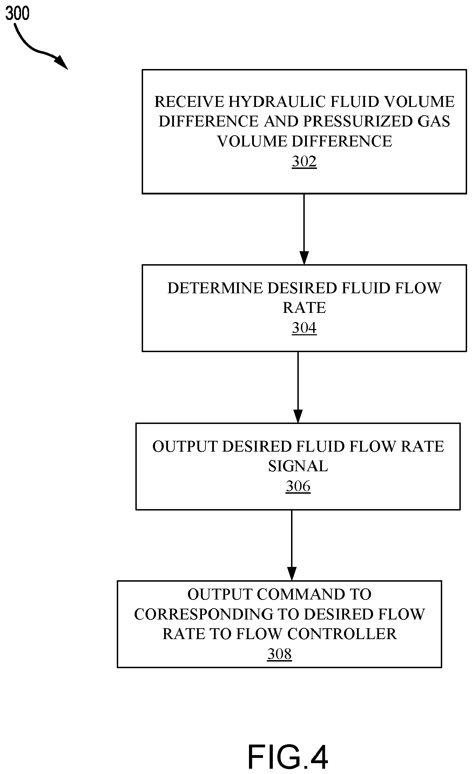

With reference to FIG. 4, a method 300 for servicing a shock strut is illustrated. With combined reference to FIGs. 4, 3B and 3C, method 300 may comprise receiving, by a system controller, at least one of a hydraulic fluid volume difference or a pressurized gas volume difference from a ground support controller (step 302). Step 302 may comprise system controller 140 receiving signals 142 corresponds hydraulic fluid volume difference and/or pressurized gas volume difference from ground support controller 110. Method 300 may comprise determining, by the system controller, a desired fluid flow rate based on the at least one of the hydraulic fluid volume difference or the pressurized gas volume difference (step 304). Step 304 may comprise system controller determining a desired fluid flow rate based on signals 142 received from ground support controller 110. Method 300 may further comprise outputting, by the system controller, a desired fluid flow rate signal corresponding to the desired fluid flow rate to at least one of a hydraulic fluid flow controller or a pressurized gas flow controller (step 306). Step 306 may include system controller 140 outputting desired fluid flow rate signal 156 to pressurized gas flow controller 150 and/or outputting desired fluid flow rate signal 170 to hydraulic fluid flow controller 160. In various embodiments, method 300 may further include outputting, by the hydraulic fluid flow controller and/or the pressurized gas flow controller, a command corresponding the desired fluid flow rate to a fluid flow rate controller (step 308). In various embodiments, the fluid flow rate controller may comprise a pump (e.g., pump 182 or pump 202) configured to control a flow of pressurized gas 152 or hydraulic fluid 162 to the shock strut. The command may be configured to cause the pump to pump the flow of pressurized gas 152 or of hydraulic fluid 162 at a fluid flow rate equal to the desired fluid flow rate. In various embodiments, step 308 may include hydraulic fluid flow controller 160 sending command 194 to pump 192 and/or pressurized gas flow controller 150 sending command 184 to pump 182.

In various embodiments, the fluid flow rate controller may comprise a valve (e.g., valve(s) 180 or valve(s) 200) configured to control a flow of pressurized gas 152 or hydraulic fluid 162 to the shock strut. The command may be configured to cause a flow of hydraulic fluid 162 or pressurized gas 152 output from the valve to flow at a fluid flow rate equal to the desired fluid flow rate. In various embodiments, step 308 may include hydraulic fluid flow controller 160 sending command 212 to valve(s) 200 and/or pressurized gas flow controller 150 sending command 192 to valve(s) 180.

Benefits and other advantages have been described herein with regard to specific embodiments. Furthermore, the connecting lines shown in the various figures contained herein are intended to represent exemplary functional relationships and/or physical couplings between the various elements. It should be noted that many alternative or additional functional relationships or physical connections may be present in a practical system. However, the benefits, advantages, and any elements that may cause any benefit or advantage to occur or become more pronounced are not to be construed as critical, required, or essential features or elements of the disclosure. The scope of the disclosure is accordingly to be limited by nothing other than the appended claims, in which reference to an element in the singular is not intended to mean "one and only one" unless explicitly so stated, but rather "one or more." Moreover, where a phrase similar to "at least one of A, B, or C" is used in the claims, it is intended that the phrase be interpreted to mean that A alone may be present in an embodiment, B alone may be present in an embodiment, C alone may be present in an embodiment, or that any combination of the elements A, B and C may be present in a single embodiment; for example, A and B, A and C, B and C, or A and B and C.

Systems, methods and apparatus are provided herein. In the detailed description herein, references to "various embodiments", "one embodiment", "an embodiment", "an example embodiment", etc., indicate that the embodiment described may include a particular feature, structure, or characteristic, but every embodiment may not necessarily include the particular feature, structure, or characteristic. Moreover, such phrases are not necessarily referring to the same embodiment. Further, when a particular feature, structure, or characteristic is described in connection with an embodiment, it is submitted that it is within the knowledge of one skilled in the art to affect such feature, structure, or characteristic in connection with other embodiments whether or not explicitly described. After reading the description, it will be apparent to one skilled in the relevant art(s) how to implement the disclosure in alternative embodiments.

As used herein, the terms "comprises", "comprising", or any other variation thereof, are intended to cover a non-exclusive inclusion, such that a process, method, article, or apparatus that comprises a list of elements does not include only those elements but may include other elements not expressly listed or inherent to such process, method, article, or apparatus.

## Claims

1. A system for servicing a shock strut, comprising:
a ground support controller (110);
a first tangible, non-transitory memory (112) configured to communicate with the ground support controller, the first tangible, non-transitory memory having instructions stored thereon that, in response to execution by the ground support controller, cause the ground support controller to perform operations comprising:
receiving, by the ground support controller, a temperature measurement (122) from a temperature sensor (72) configured to measure a temperature of the shock strut;
receiving, by the ground support controller, data (128) from an aircraft sensor (130);
determining, by the ground support controller, a target shock strut pressure for an internal volume of the shock strut and a target stroke length for the shock strut using the temperature measurement and the data from the aircraft sensor;
determining, by the ground support controller, at least one of a target hydraulic fluid volume within the shock strut or a target pressurized gas volume within the shock strut using the target shock strut pressure, the target stroke length, and the temperature measurement;
determining, by the ground support controller, at least one of a hydraulic fluid volume difference by comparing the target hydraulic fluid volume to an actual hydraulic fluid volume within the shock strut determined by the ground support controller or a pressurized gas volume difference by comparing the target pressurized gas volume to an actual pressurized gas volume within the shock strut determined by the ground support controller;
a system controller (140) in communication with the ground support controller; and
a second tangible, non-transitory memory (144) configured to communicate with the system controller, the second tangible, non-transitory memory having instructions stored thereon that, in response to execution by the system controller, cause the system controller to perform operations comprising:
receiving, by the system controller, the at least one of the hydraulic fluid volume difference or the pressurized gas volume difference from the ground support controller;
determining, by the system controller, a desired fluid flow rate for at least one of a hydraulic fluid or a pressurized gas based on the at least one of the hydraulic fluid volume difference or the pressurized gas volume difference; and
outputting, by the system controller, a desired fluid flow rate signal corresponding to the desired fluid flow rate for the at least one of the hydraulic fluid or the pressurized gas to at least one of a hydraulic fluid flow controller (160) or a pressurized gas flow controller (150).

2. The system of claim 1, further comprising:
the hydraulic fluid flow controller (160); and
a third tangible, non-transitory memory (161) configured to communicate with the hydraulic fluid flow controller, the third tangible, non-transitory memory having instructions stored thereon that, in response to execution by the hydraulic fluid flow controller, cause the hydraulic fluid flow controller to perform operations comprising:
receiving, by the hydraulic fluid flow controller, the desired fluid flow rate signal; and
outputting, by the hydraulic fluid flow controller, a command to a pump, wherein the command is configured to cause the pump to pump the hydraulic fluid at a fluid flow rate equal to the desired fluid flow rate.

3. The system of claim 1, further comprising:
the hydraulic fluid flow controller (160); and
a third tangible, non-transitory memory (161) configured to communicate with the hydraulic fluid flow controller, the third tangible, non-transitory memory having instructions stored thereon that, in response to execution by the hydraulic fluid flow controller, cause the hydraulic fluid flow controller to perform operations comprising:
receiving, by the hydraulic fluid flow controller, the desired fluid flow rate signal; and
outputting, by the hydraulic fluid flow controller, a command to a valve, wherein the command is configured to cause the valve to actuate to a position configured to output the hydraulic fluid at a fluid flow rate equal to the desired fluid flow rate.

4. The system of claim 1, further comprising:
the pressurized gas flow controller (150); and
a third tangible, non-transitory memory (151) configured to communicate with the pressurized gas flow controller, the third tangible, non-transitory memory having instructions stored thereon that, in response to execution by the pressurized gas flow controller, cause the hydraulic fluid flow controller to perform operations comprising:
receiving, by the pressurized gas flow controller, the desired fluid flow rate signal; and
outputting, by the pressurized gas flow controller, a command to a pump, wherein the command is configured to cause the pump to pump the pressurized gas at a fluid flow rate equal to the desired fluid flow rate.

5. The system of claim 1, further comprising:
the pressurized gas flow controller (150); and
a third tangible, non-transitory memory (151) configured to communicate with the pressurized gas flow controller, the third tangible, non-transitory memory having instructions stored thereon that, in response to execution by the pressurized gas flow controller, cause the hydraulic fluid flow controller to perform operations comprising:
receiving, by the pressurized gas flow controller, the desired fluid flow rate signal; and
outputting, by the pressurized gas flow controller, a command to a valve, the valve being configured to control a flow of the pressurized gas, wherein the command is configured to cause the valve to actuate to a position configured to output the pressurized gas at a fluid flow rate equal to the desired fluid flow rate.

6. The system of claim 1, wherein determining, by the system controller, the desired fluid flow rate based on the at least one of the hydraulic fluid volume difference or the pressurized gas volume difference comprises:
determining, by the system controller, if the at least one of the hydraulic fluid volume difference or the pressurized gas volume difference is greater than or equal to a first threshold value, and preferably wherein determining, by the system controller, the desired fluid flow rate based on the at least one of the hydraulic fluid volume difference or the pressurized gas volume difference further comprises:
determining, by the system controller, if the at least one of the hydraulic fluid volume difference or the pressurized gas volume difference is greater than or equal to a second threshold value; and
determining, by the system controller, to output at least one of a first fluid flow rate, a second fluid flow rate, or a third fluid flow rate as the desired fluid flow rate signal, wherein the system controller outputs the first fluid flow rate as the desired fluid flow rate signal if the at least one of the hydraulic fluid volume difference or the pressurized gas volume difference is greater than or equal to the first threshold value, and wherein the system controller outputs the second fluid flow rate as the desired fluid flow rate signal if the at least one of the hydraulic fluid volume difference or the pressurized gas volume difference is greater than or equal to the second threshold value and less than the first threshold value, and wherein the system controller outputs the third fluid flow rate as the desired fluid flow rate signal if the at least one of the hydraulic fluid volume difference or the pressurized gas volume difference is less than the second threshold value.

7. A method for servicing a shock strut, comprising:
receiving, by a ground support controller, a temperature measurement from a temperature sensor configured to measure a of the shock strut;
receiving, by the ground support controller, data from an aircraft sensor;
determining, by the ground support controller, a target shock strut pressure and a target stroke length using the temperature measurement and the data from the aircraft sensor;
determining, by the ground support controller, at least one of a target hydraulic fluid volume or a target pressurized gas volume using the target shock strut pressure, the target stroke length, and the temperature measurement;
determining, by the ground support controller, at least one of a hydraulic fluid volume difference by comparing the target hydraulic fluid volume to an actual hydraulic fluid volume of the shock strut determined by the ground support controller or a pressurized gas volume difference by comparing the target pressurized gas volume to an actual pressurized gas volume of the shock strut determined by the ground support controller; and receiving, by a system controller, the at least one of the hydraulic fluid volume difference or the pressurized gas volume difference from the ground support controller;
determining, by the system controller, a desired fluid flow rate for at least one of a hydraulic fluid or a pressurized gas based on the at least one of the hydraulic fluid volume difference or the pressurized gas volume difference; and
outputting, by the system controller, a desired fluid flow rate signal corresponding to the desired fluid flow rate for at least one of the hydraulic fluid or the pressurized gas to at least one of a hydraulic fluid flow controller or a pressurized gas flow controller.

8. The method of claim 7, further comprising:
receiving, by the at least one of the hydraulic fluid flow controller or the pressurized gas flow controller, the desired fluid flow rate signal; and
outputting, by the at least one of the hydraulic fluid flow controller or the pressurized gas flow controller, a command to a pump, the pump being configured to control a flow of the at least one of the pressurized gas or the hydraulic fluid, wherein the command is configured to cause the pump to pump the flow of the at least one of the pressurized gas or the hydraulic fluid at a fluid flow rate equal to the desired fluid flow rate.

9. The method of claim 7, further comprising:
receiving, by the at least one of the hydraulic fluid flow controller or the pressurized gas flow controller, the desired fluid flow rate signal; and
outputting, by the at least one of the hydraulic fluid flow controller or the pressurized gas flow controller, a command to a valve, the valve being configured to control a flow of the at least one of the pressurized gas or the hydraulic fluid, wherein the command is configured to cause the valve to actuate to a position configured to output the flow of the at least one of the pressurized gas or the hydraulic fluid at a fluid flow rate equal to the desired fluid flow rate.

10. The method of claim 7, further comprising:
receiving, by the ground support controller, a pressure measurement from a pressure sensor configured to measure a pressure of the shock strut;
receiving, by the ground support controller, a position measurement from a position sensor configured to measure a stroke length of the shock strut; and
determining, by the ground support controller, the at least one of the actual hydraulic fluid volume or the actual pressurized gas volume using the pressure measurement, the temperature measurement, and the position measurement.

11. The method of claim 10, wherein determining, by the system controller, the desired fluid flow rate based on the at least one of the hydraulic fluid volume difference or the pressurized gas volume difference comprises:
determining, by the system controller, if the at least one of the hydraulic fluid volume difference or the pressurized gas volume difference is greater than or equal to a first threshold value, and preferably wherein determining, by the system controller, the desired fluid flow rate based on the at least one of the hydraulic fluid volume difference or the pressurized gas volume difference further comprises:
determining, by the system controller, if the at least one of the hydraulic fluid volume difference or the pressurized gas volume difference is greater than or equal to a second threshold value; and
determining, by the system controller, to output at least one of a first fluid flow rate, a second fluid flow rate, or a third fluid flow rate as the desired fluid flow rate signal, wherein the system controller outputs the first fluid flow rate as the desired fluid flow rate signal if the at least one of the hydraulic fluid volume difference or the pressurized gas volume difference is greater than or equal to the first threshold value, and wherein the system controller outputs the second fluid flow rate as the desired fluid flow rate signal if the at least one of the hydraulic fluid volume difference or the pressurized gas volume difference is greater than or equal to the second threshold value and less than the first threshold value, and wherein the system controller outputs the third fluid flow rate as the desired fluid flow rate signal if the at least one of the hydraulic fluid volume difference or the pressurized gas volume difference is less than the second threshold value, and more preferably further comprising:
outputting, by the at least one of the hydraulic fluid flow controller or the pressurized gas flow controller, a command to at least one of a valve or a pump in response to receiving the desired fluid flow rate signal, the command being configured to cause a flow of at least one of the hydraulic fluid or the pressurized gas output from the at least one the valve or the pump to flow at a fluid flow rate equal to the at least one of the first fluid flow rate, the second fluid flow rate, or the third fluid flow rate.

12. The system of claim 1, further comprising:
a hydraulic fluid source;
a first valve configured to regulate a flow of the hydraulic fluid from the hydraulic fluid source to the shock strut;
the hydraulic fluid flow controller configured to control actuation of the first valve;
a pressurized gas source;
a second valve configured to regulate a flow of pressurized gas from the pressurized gas source to the shock strut; and
the pressurized gas flow controller configured to control actuation of the second valve;
wherein the system controller is electrically coupled to the hydraulic fluid flow controller and the pressurized gas flow controller and is configured to output the desired fluid flow rate signal to at least one of the hydraulic fluid flow controller and the pressurized gas flow controller.

13. The system of claim 12, wherein the operations performed by the ground support controller further comprise:
receiving, by the ground support controller, a pressure measurement from a pressure sensor configured to measure a pressure of the shock strut;
receiving, by the ground support controller, a position measurement from a position sensor configured to measure a stroke length of the shock strut; and
determining, by the ground support controller, at least one of the actual hydraulic fluid volume of the shock strut or the actual pressurized gas volume of the shock strut using the temperature measurement, the pressure measurement, and the position measurement.

14. The system of claim 13, wherein the first valve outputs the flow of hydraulic fluid at a first fluid flow rate if the hydraulic fluid volume difference is greater than or equal to a first threshold value, and wherein the first valve outputs the flow of hydraulic fluid at a second fluid flow rate if the hydraulic fluid volume difference is less than the first threshold value, the second fluid flow rate being less than the first fluid flow rate; and/or wherein the desired fluid flow rate decreases as the hydraulic fluid volume difference decreases.

15. The system of claims 1-6 or claims 12-14, wherein the aircraft sensor comprises at least one of a weight on wheels sensor, a landing gear position sensor, or a wheel position sensor.

## Patentansprüche

1. System zur Wartung eines Federbeins, das Folgendes umfasst:
eine Bodenstützsteuerung (110);
einen ersten greifbaren, nicht transitorischen Speicher (112), der dazu konfiguriert ist, mit der Bodenstützsteuerung zu kommunizieren, wobei in dem ersten greifbaren, nicht transitorischen Speicher Anweisungen gespeichert sind, die als Reaktion auf Ausführung durch die Bodenstützsteuerung die Bodenstützsteuerung dazu veranlassen, Vorgänge durchzuführen, die Folgendes umfassen:
Empfangen, durch die Bodenstützsteuerung, einer Temperaturmessung (122) von einem Temperatursensor (72), der dazu konfiguriert ist, eine Temperatur des Federbeins zu messen;
Empfangen, durch die Bodenstützsteuerung, von Daten (128) von einem Luftfahrzeugsensor (130);
Bestimmen, durch die Bodenstützsteuerung, eines Soll-Federbeindrucks für ein Innenvolumen des Federbeins und einer Soll-Hublänge für das Federbein unter Verwendung der Temperaturmessung und der Daten von dem Luftfahrzeugsensor;
Bestimmen, durch die Bodenstützsteuerung, mindestens eines von einem Soll-Hydraulikfluidvolumen innerhalb des Federbeins oder einem Soll-Druckgasvolumen innerhalb des Federbeins unter Verwendung des Soll-Federbeindrucks, der Soll-Hublänge und der Temperaturmessung;
Bestimmen, durch die Bodenstützsteuerung, mindestens einer von einer Hydraulikfluidvolumendifferenz durch Vergleichen des Soll-Hydraulikfluidvolumens mit einem tatsächlichen Hydraulikfluidvolumen innerhalb des Federbeins, das durch die Bodenstützsteuerung bestimmt wird, oder einer Druckgasvolumendifferenz durch Vergleichen des Soll-Druckgasvolumens mit einem tatsächlichen Druckgasvolumen innerhalb des Federbeins, das durch die Bodenstützsteuerung bestimmt wird;
eine Systemsteuerung (140) in Kommunikation mit der Bodenstützsteuerung; und
einen zweiten greifbaren, nicht transitorischen Speicher (144), der dazu konfiguriert ist, mit der Systemsteuerung zu kommunizieren, wobei in dem zweiten greifbaren, nicht transitorischen Speicher Anweisungen gespeichert sind, die als Reaktion auf Ausführung durch die Systemsteuerung die Systemsteuerung dazu veranlassen, Vorgänge durchzuführen, die Folgendes umfassen:
Empfangen, durch die Systemsteuerung, der mindestens einen von der Hydraulikfluidvolumendifferenz oder der Druckgasvolumendifferenz von der Bodenstützsteuerung;
Bestimmen, durch die Systemsteuerung, einer gewünschten Fluidströmungsrate für mindestens eines von einem Hydraulikfluid oder einem Druckgas basierend auf der mindestens einen von der Hydraulikfluidvolumendifferenz oder der Druckgasvolumendifferenz; und
Ausgeben, durch die Systemsteuerung, eines Signals der gewünschten Fluidströmungsrate, das der gewünschten Fluidströmungsrate für das mindestens eine von dem Hydraulikfluid oder dem Druckgas entspricht, an mindestens eine von einer Hydraulikfluidströmungssteuerung (160) oder einer Druckgasströmungssteuerung (150).

2. System nach Anspruch 1, das ferner Folgendes umfasst:
die Hydraulikfluidströmungssteuerung (160); und
einen dritten greifbaren, nicht transitorischen Speicher (161), der dazu konfiguriert ist, mit der Hydraulikfluidströmungssteuerung zu kommunizieren, wobei in dem dritten greifbaren, nicht transitorischen Speicher Anweisungen gespeichert sind, die als Reaktion auf Ausführung durch die Hydraulikfluidströmungssteuerung die Hydraulikfluidströmungssteuerung dazu veranlassen, Vorgänge durchzuführen, die Folgendes umfassen:
Empfangen, durch die Hydraulikfluidströmungssteuerung, des Signals der gewünschten Fluidströmungsrate; und
Ausgeben, durch die Hydraulikfluidströmungssteuerung, eines Befehls an eine Pumpe, wobei der Befehl dazu konfiguriert ist, die Pumpe dazu zu veranlassen, das Hydraulikfluid mit einer Fluidströmungsrate zu pumpen, die gleich der gewünschten Fluidströmungsrate ist.

3. System nach Anspruch 1, das ferner Folgendes umfasst:
die Hydraulikfluidströmungssteuerung (160); und
einen dritten greifbaren, nicht transitorischen Speicher (161), der dazu konfiguriert ist, mit der Hydraulikfluidströmungssteuerung zu kommunizieren, wobei in dem dritten greifbaren, nicht transitorischen Speicher Anweisungen gespeichert sind, die als Reaktion auf Ausführung durch die Hydraulikfluidströmungssteuerung die Hydraulikfluidströmungssteuerung dazu veranlassen, Vorgänge durchzuführen, die Folgendes umfassen:
Empfangen, durch die Hydraulikfluidströmungssteuerung, des Signals der gewünschten Fluidströmungsrate; und
Ausgeben, durch die Hydraulikfluidströmungssteuerung, eines Befehls an ein Ventil, wobei der Befehl dazu konfiguriert ist, das Ventil dazu zu veranlassen, in eine Position betätigt zu werden, die dazu konfiguriert ist, das Hydraulikfluid mit einer Fluidströmungsrate auszugeben, die gleich der gewünschten Fluidströmungsrate ist.

4. System nach Anspruch 1, das ferner Folgendes umfasst:
die Druckgasströmungssteuerung (150); und
einen dritten greifbaren, nicht transitorischen Speicher (151), der dazu konfiguriert ist, mit der Druckgasströmungssteuerung zu kommunizieren, wobei in dem dritten greifbaren, nicht transitorischen Speicher Anweisungen gespeichert sind, die als Reaktion auf Ausführung durch die Druckgasströmungssteuerung die Hydraulikfluidströmungssteuerung dazu veranlassen, Vorgänge durchzuführen, die Folgendes umfassen:
Empfangen, durch die Druckgasströmungssteuerung, des Signals der gewünschten Fluidströmungsrate; und
Ausgeben, durch die Druckgasströmungssteuerung, eines Befehls an eine Pumpe, wobei der Befehl dazu konfiguriert ist, die Pumpe dazu zu veranlassen, das Druckgas mit einer Fluidströmungsrate zu pumpen, die gleich der gewünschten Fluidströmungsrate ist.

5. System nach Anspruch 1, das ferner Folgendes umfasst:
die Druckgasströmungssteuerung (150); und
einen dritten greifbaren, nicht transitorischen Speicher (151), der dazu konfiguriert ist, mit der Druckgasströmungssteuerung zu kommunizieren, wobei in dem dritten greifbaren, nicht transitorischen Speicher Anweisungen gespeichert sind, die als Reaktion auf Ausführung durch die Druckgasströmungssteuerung die Hydraulikfluidströmungssteuerung dazu veranlassen, Vorgänge durchzuführen, die Folgendes umfassen:
Empfangen, durch die Druckgasströmungssteuerung, des Signals der gewünschten Fluidströmungsrate; und
Ausgeben, durch die Druckgasströmungssteuerung, eines Befehls an ein Ventil, wobei das Ventil dazu konfiguriert ist, eine Strömung des Druckgases zu steuern und wobei der Befehl dazu konfiguriert ist, das Ventil dazu zu veranlassen, in eine Position betätigt zu werden, die dazu konfiguriert ist, das Druckgas mit einer Fluidströmungsrate auszugeben, die gleich der gewünschten Fluidströmungsrate ist.

6. System nach Anspruch 1, wobei das Bestimmen, durch die Systemsteuerung, der gewünschten Fluidströmungsrate basierend auf der mindestens einen von der Hydraulikfluidvolumendifferenz oder der Druckgasvolumendifferenz Folgendes umfasst:
Bestimmen durch die Systemsteuerung, ob die mindestens eine von der Hydraulikfluidvolumendifferenz oder der Druckgasvolumendifferenz größer oder gleich einem ersten Schwellenwert ist, und vorzugsweise wobei das Bestimmen, durch die Systemsteuerung, der gewünschten Fluidströmungsrate basierend auf der mindestens einen von der Hydraulikfluidvolumendifferenz oder der Druckgasvolumendifferenz ferner Folgendes umfasst:
Bestimmen, durch die Systemsteuerung, ob die mindestens eine von der Hydraulikfluidvolumendifferenz oder der Druckgasvolumendifferenz größer oder gleich einem zweiten Schwellenwert ist; und
Bestimmen, durch die Systemsteuerung, mindestens eine von einer ersten Fluidströmungsrate, einer zweiten Fluidströmungsrate oder einer dritten Fluidströmungsrate als das Signal der gewünschten Fluidströmungsrate auszugeben, wobei die Systemsteuerung die erste Fluidströmungsrate als das Signal der gewünschten Fluidströmungsrate ausgibt, wenn die mindestens eine von der Hydraulikfluidvolumendifferenz oder der Druckgasvolumendifferenz größer oder gleich dem ersten Schwellenwert ist, und wobei die Systemsteuerung die zweite Fluidströmungsrate als das Signal der gewünschten Fluidströmungsrate ausgibt, wenn die mindestens eine von der Hydraulikfluidvolumendifferenz oder der Druckgasvolumendifferenz größer oder gleich dem zweiten Schwellenwert und kleiner als der erste Schwellenwert ist, und wobei die Systemsteuerung die dritte Fluidströmungsrate als das Signal der gewünschten Fluidströmungsrate ausgibt, wenn die mindestens eine von der Hydraulikfluidvolumendifferenz oder der Druckgasvolumendifferenz kleiner als der zweite Schwellenwert ist.

7. Verfahren zur Wartung eines Federbeins, das Folgendes umfasst:
Empfangen, durch eine Bodenstützsteuerung, einer Temperaturmessung von einem Temperatursensor, der dazu konfiguriert ist, eine Temperatur des Federbeins zu messen;
Empfangen, durch die Bodenstützsteuerung, von Daten von einem Luftfahrzeugsensor;
Bestimmen, durch die Bodenstützsteuerung, eines Soll-Federbeindrucks und einer Soll-Hublänge unter Verwendung der Temperaturmessung und der Daten von dem Luftfahrzeugsensor;
Bestimmen, durch die Bodenstützsteuerung, mindestens eines von einem Soll-Hydraulikfluidvolumen oder einem Soll-Druckgasvolumen unter Verwendung des Soll-Federbeindrucks, der Soll-Hublänge und der Temperaturmessung;
Bestimmen, durch die Bodenstützsteuerung, mindestens einer von einer Hydraulikfluidvolumendifferenz durch Vergleichen des Soll-Hydraulikfluidvolumens mit einem tatsächlichen Hydraulikfluidvolumen des Federbeins, das durch die Bodenstützsteuerung bestimmt wird, oder einer Druckgasvolumendifferenz durch Vergleichen des Soll-Druckgasvolumens mit einem tatsächlichen Druckgasvolumen des Federbeins, das durch die Bodenstützsteuerung bestimmt wird; und
Empfangen, durch eine Systemsteuerung, mindestens einer von der Hydraulikfluidvolumendifferenz oder der Druckgasvolumendifferenz von der Bodenstützsteuerung;
Bestimmen, durch die Systemsteuerung, einer gewünschten Fluidströmungsrate für mindestens eines von einem Hydraulikfluid oder einem Druckgas basierend auf der mindestens einen von der Hydraulikfluidvolumendifferenz oder der Druckgasvolumendifferenz; und
Ausgeben, durch die Systemsteuerung, eines Signals der gewünschten Fluidströmungsrate, das der gewünschten Fluidströmungsrate für mindestens eines von dem Hydraulikfluid oder dem Druckgas entspricht, an mindestens eine von einer Hydraulikfluidströmungssteuerung oder einer Druckgasströmungssteuerung.

8. Verfahren nach Anspruch 7, das ferner Folgendes umfasst:
Empfangen, durch die mindestens eine von der Hydraulikfluidströmungssteuerung oder der Druckgasströmungssteuerung, des Signals der gewünschten Fluidströmungsrate; und
Ausgeben, durch die mindestens eine von der Hydraulikfluidströmungssteuerung oder der Druckgasströmungssteuerung, eines Befehls an eine Pumpe, wobei die Pumpe dazu konfiguriert ist, eine Strömung des mindestens einen von dem Druckgas oder dem Hydraulikfluid zu steuern, wobei der Befehl dazu konfiguriert ist, die Pumpe dazu zu veranlassen, die Strömung des mindestens einen von dem Druckgas oder dem Hydraulikfluid mit einer Fluidströmungsrate zu pumpen, die gleich der gewünschten Fluidströmungsrate ist.

9. Verfahren nach Anspruch 7, das ferner Folgendes umfasst:
Empfangen, durch die mindestens eine von der Hydraulikfluidströmungssteuerung oder der Druckgasströmungssteuerung, des Signals der gewünschten Fluidströmungsrate; und
Ausgeben, durch die mindestens eine von der Hydraulikfluidströmungssteuerung oder der Druckgasströmungssteuerung, eines Befehls an ein Ventil, wobei das Ventil dazu konfiguriert ist, eine Strömung des mindestens einen von dem Druckgas oder dem Hydraulikfluid zu steuern, wobei der Befehl dazu konfiguriert ist, das Ventil dazu zu veranlassen, in eine Position betätigt zu werden, die dazu konfiguriert ist, die Strömung des mindestens einen von dem Druckgas oder dem Hydraulikfluid mit einer Fluidströmungsrate auszugeben, die gleich der gewünschten Fluidströmungsrate ist.

10. Verfahren nach Anspruch 7, das ferner Folgendes umfasst:
Empfangen, durch die Bodenstützsteuerung, einer Druckmessung von einem Drucksensor, der dazu konfiguriert ist, einen Druck des Federbeins zu messen;
Empfangen, durch die Bodenstützsteuerung, einer Positionsmessung von einem Positionssensor, der dazu konfiguriert ist, eine Hublänge des Federbeins zu messen; und
Bestimmen, durch die Bodenstützsteuerung, des mindestens einen von dem tatsächlichen Hydraulikfluidvolumen oder dem tatsächlichen Druckgasvolumen unter Verwendung der Druckmessung, der Temperaturmessung und der Positionsmessung.

11. Verfahren nach Anspruch 10, wobei das Bestimmen, durch die Systemsteuerung, der gewünschten Fluidströmungsrate basierend auf der mindestens einen von der Hydraulikfluidvolumendifferenz oder der Druckgasvolumendifferenz Folgendes umfasst:
Bestimmen durch die Systemsteuerung, ob die mindestens eine von der Hydraulikfluidvolumendifferenz oder der Druckgasvolumendifferenz größer oder gleich einem ersten Schwellenwert ist, und vorzugsweise wobei das Bestimmen, durch die Systemsteuerung, der gewünschten Fluidströmungsrate basierend auf der mindestens einen von der Hydraulikfluidvolumendifferenz oder der Druckgasvolumendifferenz ferner Folgendes umfasst:
Bestimmen, durch die Systemsteuerung, ob die mindestens eine von der Hydraulikfluidvolumendifferenz oder der Druckgasvolumendifferenz größer oder gleich einem zweiten Schwellenwert ist; und
Bestimmen, durch die Systemsteuerung, mindestens eines von einer ersten Fluidströmungsrate, einer zweiten Fluidströmungsrate oder einer dritten Fluidströmungsrate als das Signal der gewünschten Fluidströmungsrate auszugeben, wobei die Systemsteuerung die erste Fluidströmungsrate als das Signal der gewünschten Fluidströmungsrate ausgibt, wenn die mindestens eine von der Hydraulikfluidvolumendifferenz oder der Druckgasvolumendifferenz größer oder gleich dem ersten Schwellenwert ist, und wobei die Systemsteuerung die zweite Fluidströmungsrate als das Signal der gewünschten Fluidströmungsrate ausgibt, wenn die mindestens eine von der Hydraulikfluidvolumendifferenz oder der Druckgasvolumendifferenz größer oder gleich dem zweiten Schwellenwert und kleiner als der erste Schwellenwert ist, und wobei die Systemsteuerung die dritte Fluidströmungsrate als das Signal der gewünschten Fluidströmungsrate ausgibt, wenn die mindestens eine von der Hydraulikfluidvolumendifferenz oder der Druckgasvolumendifferenz kleiner als der zweite Schwellenwert ist, und stärker bevorzugt ferner Folgendes umfasst:
Ausgeben, durch die mindestens eine von der Hydraulikfluidströmungssteuerung oder der Druckgasströmungssteuerung, eines Befehls an mindestens eines von einem Ventil oder einer Pumpe als Reaktion auf das Empfangen des Signals der gewünschten Fluidströmungsrate, wobei der Befehl dazu konfiguriert ist, zu veranlassen, dass eine Strömung von mindestens einem von dem Hydraulikfluid oder dem Druckgas, die von dem mindestens einen des Ventils oder der Pumpe ausgegeben wird, mit einer Fluidströmungsrate strömt, die gleich der mindestens einen von der ersten Fluidströmungsrate, der zweiten Fluidströmungsrate oder der dritten Fluidströmungsrate ist.

12. System nach Anspruch 1, das ferner Folgendes umfasst:
eine Hydraulikfluidquelle;
ein erstes Ventil, das dazu konfiguriert ist, eine Strömung des Hydraulikfluids von der Hydraulikfluidquelle zu dem Federbein zu regulieren;
die Hydraulikfluidströmungssteuerung, die dazu konfiguriert ist, Betätigung des ersten Ventils zu steuern;
eine Druckgasquelle;
ein zweites Ventil, das dazu konfiguriert ist, eine Strömung von Druckgas von der Druckgasquelle zu dem Federbein zu regulieren; und
die Druckgasströmungssteuerung, die dazu konfiguriert ist, Betätigung des zweiten Ventils zu steuern;
wobei die Systemsteuerung elektrisch an die Hydraulikfluidströmungssteuerung und die Druckgasströmungssteuerung gekoppelt und dazu konfiguriert ist, das Signal der gewünschten Fluidströmungsrate an mindestens eine von der Hydraulikfluidströmungssteuerung und der Druckgasströmungssteuerung auszugeben.

13. System nach Anspruch 12, wobei die von der Bodenstützsteuerung durchgeführten Vorgänge ferner Folgendes umfassen:
Empfangen, durch die Bodenstützsteuerung, einer Druckmessung von einem Drucksensor, der dazu konfiguriert ist, einen Druck des Federbeins zu messen;
Empfangen, durch die Bodenstützsteuerung, einer Positionsmessung von einem Positionssensor, der dazu konfiguriert ist, eine Hublänge des Federbeins zu messen; und
Bestimmen, durch die Bodenstützsteuerung, mindestens eines von dem tatsächlichen Hydraulikfluidvolumen des Federbeins oder dem tatsächlichen Druckgasvolumen des Federbeins unter Verwendung der Temperaturmessung, der Druckmessung und der Positionsmessung.

14. System nach Anspruch 13, wobei das erste Ventil die Strömung von Hydraulikfluid mit einer ersten Fluidströmungsrate ausgibt, wenn die Hydraulikfluidvolumendifferenz größer oder gleich einem ersten Schwellenwert ist, und wobei das erste Ventil die Strömung von Hydraulikfluid mit einer zweiten Fluidströmungsrate ausgibt, wenn die Hydraulikfluidvolumendifferenz kleiner als der erste Schwellenwert ist, wobei die zweite Fluidströmungsrate geringer als die erste Fluidströmungsrate ist; und/oder wobei die gewünschte Fluidströmungsrate abnimmt, wenn die Hydraulikfluidvolumendifferenz abnimmt.

15. System nach den Ansprüchen 1-6 oder den Ansprüchen 12-14, wobei der Luftfahrzeugsensor mindestens einen von einem Sensor für Gewicht an den Rädern, einem Fahrwerkspositionssensor oder einem Radpositionssensor umfasst.

## Revendications

1. Système d'entretien d'un amortisseur, comprenant :
un dispositif de commande d'assistance au sol (110) ;
une première mémoire tangible non transitoire (112) configurée pour communiquer avec le dispositif de commande d'assistance au sol, la première mémoire tangible non transitoire ayant des instructions stockées sur celle-ci qui, en réponse à l'exécution par le dispositif de commande d'assistance au sol, amènent le dispositif de commande d'assistance au sol à exécuter des opérations comprenant :
la réception, par le dispositif de commande d'assistance au sol, d'une mesure de température (122) provenant d'un capteur de température (72) configuré pour mesurer une température de l'amortisseur ;
la réception, par le dispositif de commande d'assistance au sol, de données (128) provenant d'un capteur d'aéronef (130) ;
la détermination, par le dispositif de commande d'assistance au sol, d'une pression d'amortisseur cible pour un volume interne de l'amortisseur et une longueur de course cible pour l'amortisseur en utilisant la mesure de température et les données provenant du capteur d'aéronef ;
la détermination, par le dispositif de commande d'assistance au sol, d'au moins l'un d'un volume de fluide hydraulique cible à l'intérieur de l'amortisseur ou d'un volume de gaz sous pression cible à l'intérieur de l'amortisseur en utilisant la pression cible de l'amortisseur, la longueur de course cible et la mesure de température ;
la détermination, par le dispositif de commande d'assistance au sol, d'au moins une différence de volume de fluide hydraulique en comparant le volume de fluide hydraulique cible à un volume de fluide hydraulique réel à l'intérieur de l'amortisseur déterminée par le dispositif de commande d'assistance au sol ou une différence de volume de gaz sous pression en comparant le volume de gaz sous pression cible à un volume de gaz sous pression réel à l'intérieur de l'amortisseur déterminée par le dispositif de commande d'assistance au sol ;
un dispositif de commande de système (140) en communication avec le dispositif de commande d'assistance au sol ; et
une deuxième mémoire tangible non transitoire (144) configurée pour communiquer avec le dispositif de commande de système, la deuxième mémoire tangible non transitoire ayant des instructions stockées sur celle-ci qui, en réponse à l'exécution par le dispositif de commande de système, amènent le dispositif de commande de système à exécuter des opérations comprenant :
la réception, par le dispositif de commande de système, de l'au moins une parmi la différence de volume de fluide hydraulique ou la différence de volume de gaz sous pression du dispositif de commande d'assistance au sol ;
la détermination, par le dispositif de commande de système, d'un débit de fluide souhaité pour au moins l'un d'un fluide hydraulique ou d'un gaz sous pression sur la base de l'au moins une parmi la différence de volume de fluide hydraulique ou la différence de volume de gaz sous pression ; et
l'émission, par le dispositif de commande de système, d'un signal de débit de fluide souhaité correspondant au débit de fluide souhaité pour l'au moins un parmi le fluide hydraulique ou le gaz sous pression vers au moins l'un parmi un dispositif de commande de débit de fluide hydraulique (160) ou un dispositif de commande de débit de gaz sous pression (150).

2. Système selon la revendication 1, comprenant en outre :
le dispositif de commande de débit de fluide hydraulique (160) ; et
une troisième mémoire tangible non transitoire (161) configurée pour communiquer avec le dispositif de commande de débit de fluide hydraulique, la troisième mémoire tangible non transitoire ayant des instructions stockées sur celle-ci qui, en réponse à l'exécution par le dispositif de commande de débit de fluide hydraulique, amènent le dispositif de commande de débit de fluide hydraulique à exécuter des opérations comprenant :
la réception, par le dispositif de commande de débit de fluide hydraulique, du signal de débit de fluide souhaité ; et
l'émission, par le dispositif de commande de débit de fluide hydraulique, d'une commande à une pompe, dans lequel la commande est configurée pour amener la pompe à pomper le fluide hydraulique à un débit de fluide égal au débit de fluide souhaité.

3. Système selon la revendication 1, comprenant en outre :
le dispositif de commande de débit de fluide hydraulique (160) ; et
une troisième mémoire tangible non transitoire (161) configurée pour communiquer avec le dispositif de commande de débit de fluide hydraulique, la troisième mémoire tangible non transitoire ayant des instructions stockées sur celle-ci qui, en réponse à l'exécution par le dispositif de commande de débit de fluide hydraulique, amènent le dispositif de commande de débit de fluide hydraulique à exécuter des opérations comprenant :
la réception, par le dispositif de commande de débit de fluide hydraulique, du signal de débit de fluide souhaité ; et
l'émission, par le dispositif de commande de débit de fluide hydraulique, d'une commande à une vanne, dans lequel la commande est configurée pour amener la vanne à être actionnée vers une position configurée pour délivrer le fluide hydraulique à un débit de fluide égal au débit de fluide souhaité.

4. Système selon la revendication 1, comprenant en outre :
le dispositif de commande de débit de gaz sous pression (150) ; et
une troisième mémoire tangible non transitoire (151) configurée pour communiquer avec le dispositif de commande de débit de gaz sous pression, la troisième mémoire tangible non transitoire ayant des instructions stockées sur celle-ci qui, en réponse à l'exécution par le dispositif de commande de débit de gaz sous pression, amènent le dispositif de commande de débit de fluide hydraulique à exécuter des opérations comprenant :
la réception, par le dispositif de commande de débit de gaz sous pression, du signal de débit de fluide souhaité ; et
l'émission, par le dispositif de commande de débit de gaz sous pression, d'une commande à une pompe, dans lequel la commande est configurée pour amener la pompe à pomper le gaz sous pression à un débit de fluide égal au débit de fluide souhaité.

5. Système selon la revendication 1, comprenant en outre :
le dispositif de commande de débit de gaz sous pression (150) ; et
une troisième mémoire tangible non transitoire (151) configurée pour communiquer avec le dispositif de commande de débit de gaz sous pression, la troisième mémoire tangible non transitoire ayant des instructions stockées sur celle-ci qui, en réponse à l'exécution par le dispositif de commande de débit de gaz sous pression, amènent le dispositif de commande de débit de fluide hydraulique à exécuter des opérations comprenant :
la réception, par le dispositif de commande de débit de gaz sous pression, du signal de débit de fluide souhaité ; et
l'émission, par le dispositif de commande de débit de gaz sous pression, d'une commande à une vanne, la vanne étant configurée pour commander un écoulement du gaz sous pression, dans lequel la commande est configurée pour amener la vanne à s'actionner vers une position configurée pour délivrer le gaz sous pression à un débit de fluide égal au débit de fluide souhaité.

6. Système selon la revendication 1, dans lequel la détermination, par le dispositif de commande de système, du débit de fluide souhaité sur la base de l'au moins une parmi la différence de volume de fluide hydraulique ou la différence de volume de gaz sous pression comprend :
le fait de déterminer, par le dispositif de commande de système, si l'au moins une parmi la différence de volume de fluide hydraulique ou la différence de volume de gaz sous pression est supérieure ou égale à une première valeur seuil, et de préférence dans lequel la détermination, par le dispositif de commande de système, du débit de fluide souhaité sur la base de l'au moins une parmi la différence de volume de fluide hydraulique ou la différence de volume de gaz sous pression comprend en outre :
le fait de déterminer, par le dispositif de commande de système, si l'au moins une parmi la différence de volume de fluide hydraulique ou la différence de volume de gaz sous pression est supérieure ou égale à une seconde valeur seuil ; et
le fait de déterminer, par le dispositif de commande de système, de délivrer au moins l'un d'un premier débit de fluide, d'un deuxième débit de fluide ou d'un troisième débit de fluide en tant que signal de débit de fluide souhaité, dans lequel le dispositif de commande de système délivre le premier débit de fluide en tant que signal de débit de fluide souhaité si l'au moins une parmi la différence de volume de fluide hydraulique ou la différence de volume de gaz sous pression est supérieure ou égale à la première valeur seuil, et dans lequel le dispositif de commande de système délivre le deuxième débit de fluide en tant que signal de débit de fluide souhaité si l'au moins une parmi la différence de volume de fluide hydraulique ou la différence de volume de gaz sous pression est supérieure ou égale à la seconde valeur seuil et inférieure à la première valeur seuil, et dans lequel le dispositif de commande de système délivre le troisième débit de fluide en tant que signal de débit de fluide souhaité si l'au moins une parmi la différence de volume de fluide hydraulique ou la différence de volume de gaz sous pression est inférieure à la seconde valeur seuil.

7. Procédé d'entretien d'un amortisseur, comprenant :
la réception, par le dispositif de commande d'assistance au sol, d'une mesure de température provenant d'un capteur de température configuré pour mesurer une de l'amortisseur ;
la réception, par le dispositif de commande d'assistance au sol, de données provenant d'un capteur d'aéronef ;
la détermination, par le dispositif de commande d'assistance au sol, d'une pression d'amortisseur cible et d'une longueur de course cible à l'aide de la mesure de température et des données provenant du capteur d'aéronef ;
la détermination, par le dispositif de commande d'assistance au sol, d'au moins l'un d'un volume de fluide hydraulique cible ou d'un volume de gaz sous pression cible en utilisant la pression d'amortisseur cible, la longueur de course cible et la mesure de température ;
la détermination, par le dispositif de commande d'assistance au sol, d'au moins une différence de volume de fluide hydraulique en comparant le volume de fluide hydraulique cible à un volume de fluide hydraulique réel de l'amortisseur déterminée par le dispositif de commande d'assistance au sol ou une différence de volume de gaz sous pression en comparant le volume de gaz sous pression cible à un volume de gaz sous pression réel de l'amortisseur déterminée par le dispositif de commande d'assistance au sol ; et
la réception, par un dispositif de commande de système, de l'au moins une parmi la différence de volume de fluide hydraulique ou la différence de volume de gaz sous pression du dispositif de commande d'assistance au sol ;
la détermination, par le dispositif de commande de système, d'un débit de fluide souhaité pour au moins l'un d'un fluide hydraulique ou d'un gaz sous pression sur la base de l'au moins une parmi la différence de volume de fluide hydraulique ou la différence de volume de gaz sous pression ; et
l'émission, par le dispositif de commande de système, d'un signal de débit de fluide souhaité correspondant au débit de fluide souhaité pour au moins un parmi le fluide hydraulique ou le gaz sous pression vers au moins l'un parmi un dispositif de commande de débit de fluide hydraulique ou un dispositif de commande de débit de gaz sous pression.

8. Procédé selon la revendication 7, comprenant en outre :
la réception, par l'au moins un parmi le dispositif de commande de débit de fluide hydraulique ou le dispositif de commande de débit de gaz sous pression, du signal de débit de fluide souhaité ; et
l'émission, par l'au moins un parmi le dispositif de commande de débit de fluide hydraulique ou le dispositif de commande de débit de gaz sous pression, d'une commande à une pompe, la pompe étant configurée pour commander un écoulement de l'au moins un parmi le gaz sous pression ou le fluide hydraulique, dans lequel la commande est configurée pour amener la pompe à pomper l'écoulement de l'au moins un parmi le gaz sous pression ou le fluide hydraulique à un débit de fluide égal au débit de fluide souhaité.

9. Procédé selon la revendication 7, comprenant en outre :
la réception, par l'au moins un parmi le dispositif de commande de débit de fluide hydraulique ou le dispositif de commande de débit de gaz sous pression, du signal de débit de fluide souhaité ; et
l'émission, par l'au moins un parmi le dispositif de commande de débit de fluide hydraulique ou le dispositif de commande de débit de gaz sous pression, d'une commande à une vanne, la vanne étant configurée pour commander un écoulement de l'au moins un parmi le gaz sous pression ou le fluide hydraulique, dans lequel la commande est configurée pour amener la vanne à s'actionner vers une position configurée pour délivrer l'écoulement de l'au moins un parmi le gaz sous pression ou le fluide hydraulique à un débit de fluide égal au débit de fluide souhaité.

10. Procédé selon la revendication 7, comprenant en outre :
la réception, par le dispositif de commande d'assistance au sol, d'une mesure de pression provenant d'un capteur de pression configuré pour mesurer une pression de l'amortisseur ;
la réception, par le dispositif de commande d'assistance au sol, d'une mesure de position provenant d'un capteur de position configuré pour mesurer une longueur de course de l'amortisseur ; et
la détermination, par le dispositif de commande d'assistance au sol, de l'au moins un parmi le volume de fluide hydraulique réel ou le volume de gaz sous pression réel en utilisant la mesure de pression, la mesure de température et la mesure de position.

11. Procédé selon la revendication 10, dans lequel la détermination, par le dispositif de commande de système, du débit de fluide souhaité sur la base de l'au moins une parmi la différence de volume de fluide hydraulique ou la différence de volume de gaz sous pression comprend :
le fait de déterminer, par le dispositif de commande de système, si l'au moins une parmi la différence de volume de fluide hydraulique ou la différence de volume de gaz sous pression est supérieure ou égale à une première valeur seuil, et de préférence dans lequel la détermination, par le dispositif de commande de système, du débit de fluide souhaité sur la base de l'au moins une parmi la différence de volume de fluide hydraulique ou la différence de volume de gaz sous pression comprend en outre :
le fait de déterminer, par le dispositif de commande de système, si l'au moins une parmi la différence de volume de fluide hydraulique ou la différence de volume de gaz sous pression est supérieure ou égale à une seconde valeur seuil ; et
le fait de déterminer, par le dispositif de commande de système, de délivrer au moins l'un d'un premier débit de fluide, d'un deuxième débit de fluide ou d'un troisième débit de fluide en tant que signal de débit de fluide souhaité, dans lequel le dispositif de commande de système délivre le premier débit de fluide en tant que signal de débit de fluide souhaité si l'au moins une parmi la différence de volume de fluide hydraulique ou la différence de volume de gaz sous pression est supérieure ou égale à la première valeur seuil, et dans lequel le dispositif de commande de système délivre le deuxième débit de fluide en tant que signal de débit de fluide souhaité si l'au moins une parmi la différence de volume de fluide hydraulique ou la différence de volume de gaz sous pression est supérieure ou égale à la seconde valeur seuil et inférieure à la première valeur seuil, et dans lequel le dispositif de commande de système délivre le troisième débit de fluide en tant que signal de débit de fluide souhaité si l'au moins une parmi la différence de volume de fluide hydraulique ou la différence de volume de gaz sous pression est inférieure à la seconde valeur seuil et de manière davantage préférée comprenant en outre :
l'émission, par l'au moins un parmi le dispositif de commande de débit de fluide hydraulique ou le dispositif de commande de débit de gaz sous pression, d'une commande à au moins l'une d'une vanne ou d'une pompe en réponse à la réception du signal de débit de fluide souhaité, la commande étant configurée pour provoquer un écoulement d'au moins un parmi le fluide hydraulique ou le gaz sous pression sortant de l'au moins une parmi la vanne ou la pompe pour s'écouler à un débit de fluide égal à l'au moins un parmi le premier débit de fluide, le deuxième débit de fluide, ou le troisième débit de fluide.

12. Système selon la revendication 1, comprenant en outre :
une source de fluide hydraulique ;
une première vanne configurée pour réguler un écoulement du fluide hydraulique provenant de la source de fluide hydraulique vers l'amortisseur ;
le dispositif de commande de débit de fluide hydraulique étant configuré pour commander l'actionnement de la première vanne ;
une source de gaz sous pression ;
une seconde vanne configurée pour réguler un écoulement de gaz sous pression provenant de la source de gaz sous pression vers l'amortisseur ; et
le dispositif de commande de débit de gaz sous pression étant configuré pour commander l'actionnement de la seconde vanne ;
dans lequel le dispositif de commande de système est couplé électriquement au dispositif de commande de débit de fluide hydraulique et au dispositif de commande de débit de gaz sous pression et est configuré pour émettre le signal de débit de fluide souhaité vers au moins l'un parmi le dispositif de commande de débit de fluide hydraulique et le dispositif de commande de débit de gaz sous pression.

13. Système selon la revendication 12, dans lequel les opérations effectuées par le dispositif de commande d'assistance au sol comprennent en outre :
la réception, par le dispositif de commande d'assistance au sol, d'une mesure de pression provenant d'un capteur de pression configuré pour mesurer une pression de l'amortisseur ;
la réception, par le dispositif de commande d'assistance au sol, d'une mesure de position provenant d'un capteur de position configuré pour mesurer une longueur de course de l'amortisseur ; et
la détermination, par le dispositif de commande d'assistance au sol, d'au moins l'un parmi le volume de fluide hydraulique réel de l'amortisseur ou le volume de gaz sous pression réel de l'amortisseur en utilisant la mesure de température, la mesure de pression et la mesure de position.

14. Système selon la revendication 13, dans lequel la première vanne délivre l'écoulement de fluide hydraulique à un premier débit de fluide si la différence de volume de fluide hydraulique est supérieure ou égale à une première valeur seuil, et dans lequel la première vanne délivre l'écoulement de fluide hydraulique à un deuxième débit de fluide si la différence de volume de fluide hydraulique est inférieure à la première valeur seuil, le deuxième débit de fluide étant inférieur au premier débit de fluide ; et/ou dans lequel le débit de fluide souhaité diminue à mesure que la différence de volume de fluide hydraulique diminue.

15. Système selon les revendications 1 à 6 ou les revendications 12 à 14, dans lequel le capteur d'aéronef comprend au moins l'un parmi un capteur de poids sur roues, un capteur de position de train d'atterrissage ou un capteur de position de roue.
